# DEMANDE DE BREVET EUROPEEN

(11) **EP 0 553 046 A1**
(43) Date de publication de la demande: **28.07.1993**
(21) Numéro de dépôt: 93420039.5
(22) Date de dépôt: 25.01.1993
(51) Int. Cl.: G06K 7/10

(54) **Dispositif de lecture optique d'informations codées sur un support**

(30) Priorité: 24.01.1992 FR 9200971
(71) Demandeur: SEB S.A., F-69130 Ecully (FR)
(72) Inventeur: Marsille, Niels, F-21121 Ahuy (FR); Bouly, Bernard, F-21000 Dijon (FR)

(57) **Abrégé**

- Dispositif de lecture optique
- L'invention se rapporte à un dispositif de lecture optique d'une série d'informations codées (20, e) sur un support (2) du type code à barres, comportant au moins une source lumineuse (1) destinée à émettre un faisceau incident de lecture à partir d'une surface de lecture (4a) devant laquelle l'information codée (20, e) récepteur (11) pour la lecture du faisceau lumineux réfléchi par le support (2), un canal de réflexion (10) pour l'acheminement du faisceau réfléchi, s'étendant à partir de la surface de lecture (4a) et entre ladite surface et le moyen récepteur (11), caractérisé en ce que ledit canal (10) présente une section transversale, dont la dimension, prise dans le sens de défilement de l'information codée (20, e) devant ledit canal (10), est au plus sensiblement égale, et de préférence inférieure, à la largeur des informations codées et la plus petite valeur de l'intervalle les séparant.
- Appareils électroménagers

(Fig. 2)

## Description

La présente invention se rapporte au domaine technique général de la lecture et de l'exploitation d'informations codées présentes sur un support tel qu'une étiquette, et codées de préférence selon un code à barres.

La présente invention concerne un dispositif de lecture optique d'une série d'informations codées, du type code à barres par exemple apposées sur un support, ledit dispositif comportant au moins une source lumineuse destinée à émettre un faisceau incident de lecture en direction de l'information codée, et au moins un moyen récepteur pour la lecture du faisceau lumineux réfléchi par l'information codée et/ou son support.

L'invention s'applique plus particulièrement, mais non exclusivement, au domaine de l'électroménager, le dispositif de lecture optique conforme à l'invention étant plus particulièrement destiné à équiper les appareils électroménagers tels que par exemple des fours classiques, des fours à micro-ondes, des autocuiseurs programmables, des machines à laver, etc ... Dans ces applications préférentielles, les supports du code à barres sont constitués par les emballages des produits qui sont destinés à être traités dans les appareils électroménagers, les informations codées contenant par exemple des indications relatives au produit et à son traitement dans l'appareil électroménager.

Dans tous les exemples décrits ultérieurement il sera fait référence exclusivement à des informations codées sous la forme classique, dite du code à barres, mais il est bien entendu que tout autre type d'informations codées représentant une succession de zones absorbant et réfléchissant la lumière, pourrait être utilisé, sans pour autant sortir du cadre de l'invention.

Différents types de lecteurs optiques sont actuellement connus et utilisés selon le mode de saisie des informations codées, ou encore selon le type de surface sur laquelle est apposée l'information codée. On connaît ainsi par exemple le lecteur de type "douchette" constitué d'un nombre plus ou moins important de cellules optiques juxtaposées linéairement et définissant une surface de lecture linéaire ne nécessitant pas de contact direct entre le code et le lecteur ni d'ailleurs un balayage physique. Un tel type de lecteur est plus particulièrement recommandé pour des saisies d'informations rapides ou pour la saisie d'informations codées et apposées sur une surface régulière.

On connaît également des lecteurs optiques à chargement, dispositif dans lequel le dispositif de lecture est passé sur la série de barres codées. Le résultat de la lecture est ensuite déchargée dans l'appareil à commander.

On connait également le lecteur de type "crayon" que l'utilisateur déplace sur la suite de barres. Le crayon comporte par exemple une tête de lecture sous la forme d'une bille en saphir possédant des propriétés optiques de convergence, de manière à canaliser le flux de lumière provenant d'une source lumineuse intégrée dans le corps du crayon. Le flux lumineux réfléchi à la surface du code à barres est ensuite transmis par divergence au travers de la bille de lecture en direction d'un moyen de détection et de réception du faisceau lumineux, ledit moyen étant monté à l'intérieur du corps du crayon. Les moyens de réception peuvent par exemple consister en des détecteurs optiques reliés à des moyens de lecture ou de décodage de l'information reçue.

On connait enfin un dernier type de lecteur optique consistant en un lecteur à laser dont les impulsions balaient à fréquence élevée un espace pour lire à distance le code à barres. L'information est ensuite transmise directement ou indirectement, à l'appareil destiné à recevoir et utiliser les informations codées.

Les quatre systèmes de lecture optique précédemment évoqués utilisent un moyen commun pour transporter l'information représentée par les barres et les intervalles entre ces dernières, vers un moyen de lecture et de décodage, à savoir un ou plusieurs faisceaux lumineux. La formation des faisceaux lumineux, tant incidents que réfléchis, est assurée dans tous les cas par un ensemble plus ou moins complexe de jeux de lentilles ou miroirs. Le recours à un jeu de lentilles est rendu nécessaire par l'obligation d'éloigner de la zone de lecture les composants électroniques d'émissions et leur réception lumineuse pour tenir compte d'une part de la faible largeur des barres et de leur intervalle et d'autre part de l'encombrement desdits composants. La réalisation de telles structures est bien évidemment complexe, et s'inscrit dans un processus de fabrication et de montage extrèmement précis conduisant à un coût unitaire particulièrement élevé. Il s'avère en conséquence impossible d'envisager d'incorporer ce type de lecteur précédemment mentionné dans des appareils de grande diffusion à prix de revient relativement faible tels que des appareils électroménagers.

Il a cependant déjà été proposé, par exemple dans le brevet US-A-4.837.414, de coupler un lecteur électronique de code à barres avec un four à micro-ondes. Dans cette application spécifique, le lecteur optique est cependant classique et est constitué d'un boitier de commande à distance séparé physiquement du four et réalisé selon le schéma classique des lecteurs à distance par infrarouge. La lecture effectuée s'apparente donc à celle du lecteur optique à laser précédemment évoqué incluant non seulement une pluralité de lentilles, mais encore une série de moyens électroniques d'appréciation des codes à barres et de transmission de l'information. Cette réalisation connue permet la lecture d'informations codées par exemple à partir d'un livre de recettes de cuisine, l'information étant ensuite transmise à une unité de contrôle programmée qui est intégrée dans le four et destinée à règler les paramètres de fonctionnement du four, tels que la température ou le temps de cuisson, selon la recette. La réalisation décrite souffre bien évidemment d'un inconvénient majeur lié à l'utilisation d'un lecteur optique de coût élevé et de conception et réalisation complexe. Le dispositif ainsi réalisé s'avère en effet comporter pour la mise en oeuvre de la lecture optique une série d'éléments électroniques présents à la fois dans le lecteur et dans le four. Une telle multiplication d'éléments chers et complexes est incompatible avec une utilisation grand public.

De plus un dispositif décrit dans la publication EP-0226 034 A2, a déjà prévu pour améliorer la lecture d'un code, le recours à des fentes. Des désavantages importants persistent néanmoins quant à la lecture, car tous les rayonnements parasites ne peuvent être évités, et quant à la réalisation industrielle d'un tel dispositif.

L'objet de la présente invention vise en conséquence à réaliser un dispositif de lecture optique simplifié, ne présentant pas les inconvénients énumérés précédemment, et ne comportant pas de lentilles dans son circuit optique, tout en étant capable de lire et traiter des informations codées avec une précision suffisante.

Un autre objet de l'invention vise à fournir un dispositif de lecture optique à coût réduit, tout en conservant de bonnes performances de lecture.

Un autre objet de l'invention vise à fournir un dispositif de lecture optique qui puisse être réalisé à partir d'une série d'éléments limités et qui soit de fabrication et de montage particulièrement aisé.

Un autre objet de l'invention est de réaliser un dispositif de lecture optique qui soit facilement intégrable dans un appareil électroménager.

Les objets assignés à l'invention sont atteints à l'aide d'un dispositif de lecture optique d'une série d'informations codées sur un support, du type code à barres, comportant au moins une source lumineuse destinée à émettre un faisceau incident de lecture à partir d'une surface de lecture devant laquelle l'information codée est amenée à défiler, au moins un moyen récepteur pour lecture du faisceau lumineux réfléchi par le support ainsi qu'un canal de réflexion pour l'acheminement du faisceau réfléchi, s'étendant à partir de la surface de lecture et entre ladite surface et le moyen récepteur caractérisé en ce que ledit canal présente une section transversale, dont la dimension, prise dans le sens de défilement de l'information codée devant ledit canal, est au plus sensiblement égale, et de préférence inférieure, à la largeur des informations codées et la plus petite valeur de l'intervalle les séparant.

D'autres particularités et avantages de l'invention apparaitront et ressortiront plus en détail à la lecture de la description faite ci-après, en référence aux dessins annexés, donnés à titre d'exemple illustratif non limitatif, dans lesquels :
- La figure 1 représente, selon une coupe transversale une première variante de réalisation d'un dispositif de lecture optique conforme à l'invention.
- La figure 2 représente selon une coupe transversale, une seconde variante de réalisation d'un dispositif de lecture optique conforme à l'invention.
- La figure 3 représente selon une coupe transversale, un dispositif de lecture optique conforme à l'invention, et intégré dans la paroi d'un appareil.
- La figure 4 montre selon une vue en perspective un dispositif de lecture optique conforme à l'invention, intégré dans un four.

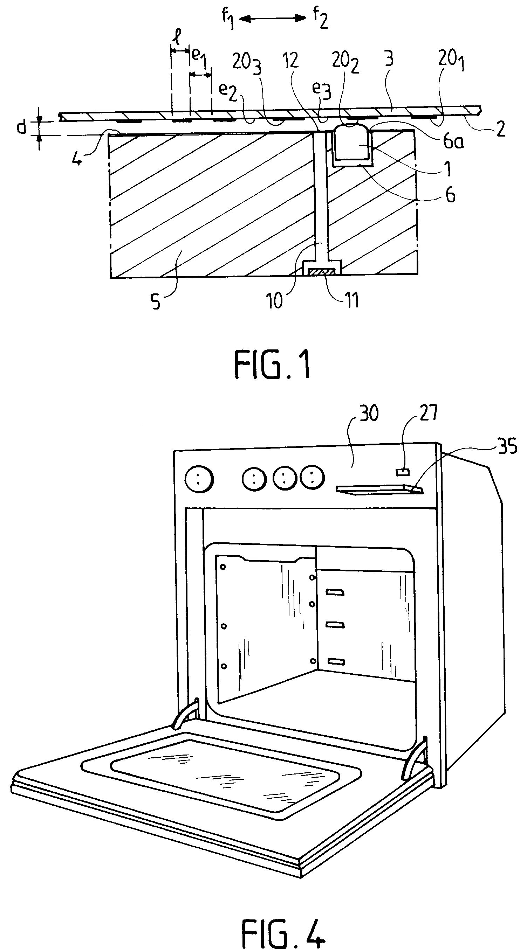

Le dispositif de lecture optique conforme à l'invention montré à la figure 1 comporte au moins une source lumineuse 1 destinée à émettre un faisceau incident de lecture devant impressionner la face 2 d'un support 3 amené à défiler devant la surface de lecture 4 du dispositif de lecture. La source lumineuse 1 peut être constituée de tout émetteur de lumière connu, et par exemple d'une diode électroluminescente disposée dans le corps principal 5 du dispositif de lecture conforme à l'invention. Dans la variante de réalisation montrée à la figure 1 la source lumineuse 1 est insérée dans une cavité 6 ménagée dans le corps principal 5 à partir de la surface de lecture 4 en formant une ouverture 6a de manière que la source lumineuse 1 soit par exemple sensiblement en position d'affleurement avec la surface de lecture 4. Selon cette disposition, le faisceau lumineux incident est émis sensiblement normalement par rapport à la surface de lecture 4, et à partir de cette dernière.

Le dispositif de lecture optique conforme à l'invention comprend également un canal de réflexion 10 destiné à acheminer le faisceau lumineux réflichi par la face 2 vers un récepteur de lumière 11 tel qu'un phototransistor, chargé de la lecture et du décodage de l'information codée. Le canal de réflexion 10 s'étend entre la surface de lecture 4 dans laquelle il débouche par un orifice 12, et le récepteur de lumière 11. Dans l'exemple montré à la figure 1, le canal de réflexion 10 est formé par une conduite tubulaire, par exemple de section circulaire, traversant de part en part le corps principal 5 selon une direction rectiligne normale au plan d'extension de la surface de lecture 4. Il est bien évident qu'il est possible de réaliser le canal de réflexion 10, d'autres manières en lui conférant notamment une section transversale quelconque, par exemple carrée ou rectangulaire. L'orifice 12 doit également être disposé au voisinage de la source lumineuse 1 pour qu'une quantité significative du flux lumineux réfléchi puisse être acheminée dans le canal de réflexion 10 vers le réflecteur de lumière 11. Le canal de réflexion 10 peut être réalisé dans la masse même du corps principal 5 lequel peut être constitué de tout matériau apte à subir un perçage. Dans le cas d'une utilisation de matériau translucide, le canal de réflexion 10 peut être constitué de préférence en barreaux de polyméthacrylate de méthylène, ou encore de barreaux de verre voire même de fibres de verre. Le canal de réflexion 10 peut également être simplement constitué d'un gainage soutenu par une armature délimitant alors le corps principal 5.

Le support 3 de l'information codée apposée sur la face 2 est constitué de supports souples ou rigides tels qu'une étiquette, la page d'un livre ou une partie d'emballage, comportant une série d'informations codées appliquées par exemple par impression et représentant une suite de traits parallèles 20¹, 20², 20³, etc..., de différentes largeurs séparés par des espaces interbarres également de différentes largeurs et notées en e₁, e₂, e₃, etc .... Ces informations codées sont plus communément connues sous le nom de code à barres, le principe de lecture d'un tel code consistant à faire défiler, par exemple manuellement sur la surface de lecture 4, le support 3 de façon que la succession des barres 20¹, 20², 20³, etc..., et des espaces interbarres "e" soient impressionnés par le faisceau lumineux issu de la source lumineuse 1. Lors du déplacement, les rayons lumineux issus de la source lumineuse 1 sont absorbés par les barres 20¹, 20², 20³, de couleur noire, alors que les espaces interbarres "e", généralement blancs, réfléchissent la lumière par le canal de réflexion 10 en direction du récepteur de lumière 11. La succession et la durée d'impression et de non impression du récepteur de lumière 11 représente une image du code imprimé, ladite image pouvant être ensuite convertie en une série de signaux de commande. Il importe lors du déplacement du support 3 sensiblement à vitesse constante et selon un axe sensiblement perpendiculaire aux barres 20 et interbarres "e", et matérialisé par l'une des deux directions f₁ ou f₂, que le faisceau réfléchi soit suffisamment propre pour pouvoir être lu avec suffisamment de précision par le récepteur de lumière 11. A cet éffet étant donné le caractère du type "tout ou rien" des signaux lumineux, il importe que le canal de reflexion 10 présente selon l'axe commun des directions f₁, f₂, une dimension qui est au plus sensiblement égale à la plus petite des largeurs "l" des barres, et la plus petite valeur de l'espace interbarres "e" les séparant. De préférence, la section transversale du canal de réflexion 10 présentera une dimension prise, selon l'axe commun des directions f₁, f₂, inférieure par exemple de quelques dixièmes de millimètres à la plus petite des largeurs "l" des barres et à la plus petite des distances "e". De cette façon le récepteur de lumière 11 peut différencier avec suffisamment de précision le passage complet d'une barre correspondant à un intervalle de temps sans aucune lumière réfléchie d'une part, et le passage complet d'un espace interbarres pendant un intervalle de temps donné correspondant à un faisceau lumineux réfléchi d'autre part, sans qu'il y ait interférence des deux passages.

Il importe également pour que la lecture des informations codées soit suffisamment précise, que pour une section donnée du canal de réflexion 10, sa longueur axiale soit contenue dans les limites permettant une exposition ou impression correcte et significative du récepteur de lumière 11. La détermination de la longueur optimale est à la portée d'un homme de métier.

De la même façon, la lecture du code à barres sera d'autant plus précise que la distance "d" séparant la face 2 du plan d'extension de la surface de lecture 4 ou de la surface externe de l'émetteur 1 lorsque ce dernier forme une protubérance par rapport à la surface 4, est faible, sans être toutefois nulle de manière à laisser un espace suffisant permettant l'émission de lumière et sa réflexion par la face 2. En pratique, compte tenu des contraintes dimensionnelles liées à la surface disponible réservée au code, la distance "d" définissant une zone de lecture sera comprise entre 0 et 5 millimètres, la valeur 0 étant exclue.
A titre d'exemple non limitatif, il s'est avéré que pour des largeurs minimales "l", et "e", de l'ordre de un millimètre, un canal de réflexion 10 de section circulaire de diamètre de 0,8 millimètre convenait particulièrement bien. Dans le cas de la formation d'un canal de réflexion 10 dans une masse opaque le diamètre du canal de réflexion 10 sera limité à 0,5 millimètre compte tenu de l'impossibilité de réaliser techniquement un diamètre inférieur. En revanche dans le cas d'une utilisation de matériaux translucides il sera par exemple possible, en cas d'utilisation de fibres de verre, d'avoir recours à des barreaux de réflexion d'un diamètre qui peut être voisin de 0,1 millimètre.

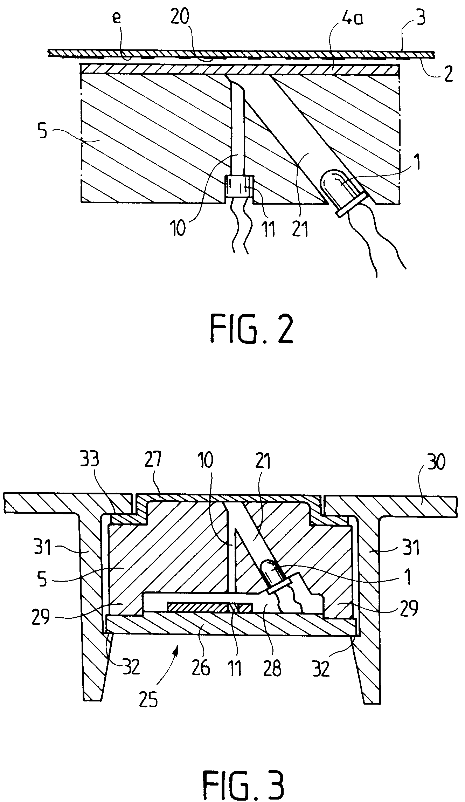

La variante de réalisation montrée à la figure 2, ne diffère de celle montrée à la figure 1 que par la réalisation, dans la masse du corps principal 5, d'un canal incident 21 d'acheminement du faisceau lumineux incident à partir de la source lumineuse 1. Avantageusement le canal de réflexion 10 et le canal incident 21 sont rectilignes, de section circulaire et orientés angulairement l'un par rapport à l'autre pour que leurs axes longitudinaux respectifs se joignent à partir de la surface 4 ou au delà et par exemple au voisinage de cette dernière dans les limites de la zone de lecture définie ci-dessus. Les canaux 10 et 21 peuvent ainsi se joindrent sur la surface de lecture 4 au niveau de son plan d'extension, ou au delà, i.e. en aval de la surface 4, en considérant le sens de progression du flux lumineux dans le canal incident 21. Cette disposition permet une amélioration de la finesse de lecture. Dans la variante montrée à la figure 2, la surface de lecture 4 sur laquelle est amené à défiler le support 3, est constituée d'un film ou d'une paroi protectrice translucide 4a recouvrant le corps principal 5 et les orifices 12 et 6a et permettant d'éviter l'obturation ou le salissement des canaux incidents 21 et de réflexion 10. Avantageusement également le film protecteur peut être réalisé en un matériau teinté, par exemple en .rouge, afin d'assurer une fonction de filtration des lumières parasites, et en particulier celles émises par les éclairages courants. Avantageusement le film protecteur pourra être réalisé en polycarbonate ou en polyimide aromatique.

A titre de variante il est bien évidemment possible de disposer les canaux de réflexion 10 et incident 21 selon d'autres configurations géométriques. Ainsi il est envisageable de réaliser le canal incident 21 de manière concentrique au canal de réflexion 10 pour qu'il entoure ce dernier.

Le dispositif de lecture optique est avantageusement destiné à être réalisé, tel que cela est montré par exemple à la figure 3 sous la forme d'un coffret 25 limité par un fond 26 sur lequel vient reposer le corps principal 5 délimité extérieurement sur une face par une fenêtre de lecture 27. Dans un tel cas la fenêtre de lecture 27 repose contre la partie supérieure du corps principal 5 dans laquelle débouchent le canal de réflexion 10 et le canal incident 21, et est constitué d'une paroi protectrice remplissant une fonction de protection des canaux et de filtration des lumières parasites. La partie inférieure du coffret 25 est constituée d'une chambre 28 dans laquelle sont disposés le récepteur de lumière 11 et son support, ainsi que par exemple au moins une partie de la source lumineuse 1. Avantageusement, la partie inférieure du corps principal 5 comporte des plots de centrage 29 destinés à venir en appui contre des épaulements ménagés dans le fond 26. Cette particularité permet lors du montage un centrage correct et immédiat du canal de réflexion 10 au dessus et de préférence au droit de l'élément récepteur de lumière 11. Le coffret 25 est destiné à être intégré dans un appareil électroménager, tel qu'un four (figure 4), de manière que la fenêtre de lecture 27 soit intégrée, et par exemple affleurante avec une paroi externe 30 de l'appareil électroménager. A cet effet la paroi externe 30 peut comporter deux ailes de fixation 31 pourvues d'épaulements terminaux 32 contre lesquels vient reposer le fond 26 du coffret 25. Le coffret 25 repose en appui contre la paroi externe 30 par l'intermédiaire des épaulements périphériques 33 réalisés dans la fenêtre de lecture 27.

Les informations codées contenues par exemple sur l'emballage d'un produit destiné à être cuit ou réchauffé peuvent ainsi être lues par passage devant la fenêtre de lecture 27, le produit étant avantageusement supporté par une console 35 permettant un positionnement correct des informations codées.

Le dispositif de lecture conforme à l'invention permet ainsi de lire des informations codées, de type code à barres sans avoir recours à un dispositif optique pourvu d'une série de lentilles comme cela est traditionnellement le cas. Il en résulte bien évidemment une simplification importante de la fabrication, et également une réduction du coût total du lecteur, sans toutefois perturber la qualité de lecture des informations codées.

## Revendications

1. Dispositif de lecture optique d'une série d'informations codées (20₁, 20₂, 20₃, e₁, e₂, e₃) sur un support (2) du type code à barres, comportant au moins une source lumineuse (1) destinée à émettre un faisceau incident de lecture à partir d'une surface de lecture (4) devant laquelle l'information codée (20₁, 20₂, 20₃, e₁, e₂, e₃) est amenée à défiler, au moins un moyen récepteur (11) pour la lecture du faisceau lumineux réfléchi par le support (2) ainsi qu'un canal de réflexion (10) pour l'acheminement du faisceau réfléchi, s'étendant à partir de la surface de lecture (4) et entre ladite surface et le moyen récepteur (11), caractérisé en ce que ledit canal (10) présente une section transversale, dont la dimension, prise dans le sens de défilement de l'information codée (20₁, 20₂, 20₃, e₁, e₂, e₃) devant ledit canal (10), est au plus sensiblement égale, et de préférence inférieure, à la plus petite largeur des informations codées et à la plus petite valeur de l'intervalle les séparant.

2. Dispositif selon la revendication 1 caractérisé en ce qu'il comporte un canal incident (21) d'acheminement du faisceau incident, s'étendant à partir de la source lumineuse (1).

3. Dispositif selon les revendications 1 et 2 caractérisé en ce que le canal de réflexion (10) et le canal incident (21) sont rectilignes et de section circulaire.

4. Dispositif selon les revendications 2 ou 3 caractérisé en ce que le canal de réflexion (10) et le canal incident (21) sont orientés angulairement pour que leurs axes longitudinaux respectifs se joignent à partir de la surface de lecture (4), et de préférence au dela.

5. Dispositif selon l'une des revendications 2 à 3 caractérisé en ce que le canal incident (21) est concentrique au canal de réflexion (10) et entoure ce dernier.

6. Dispositif selon l'une des revendications 1 à 5 caractérisé en ce que le canal de réflexion (10) et le canal incident (21) sont réalisés sous la forme de perçage dans une masse opaque, formant le corps principal (5) du dispositif.

7. Dispositif selon l'une des revendications 1 à 5 caractérisé en ce que le canal de réflexion (10) et le canal incident (21) sont réalisés sous la forme de perçage dans une masse translucide de préférence en polyméthacrylate de méthyle ou de verre formant le corps principal (5) du dispositif.

8. Dispositif selon l'une des revendications 1 à 5 caractérisé en ce que le canal de réflexion (10) et le canal incident (21) sont réalisés sous la forme de barreaux de fibres de verre.

9. Dispositif selon l'une des revendications 1 à 8 caractérisé en ce que la surface de lecture (4) est revêtue d'une paroi protectrice translucide (4a), de préférence apte à filtrer les rayonnements lumineux parasites.

10. Dispositif selon l'une des revendications 1 à 9 caractérisé en ce qu'il est réalisé sous la forme d'un coffret (25), limité sur une face par une fenêtre de lecture (27) constituée d'une paroi translucide, de préférence filtrant les lumières parasites.

11. Appareil électroménager comportant un dispositif de lecture optique conforme à l'une des revendications 1 à 10.

12. Appareil électroménager selon la revendication 11 caractérisé en ce qu'il est constitué d'un four.
